(19) Europäisches Patentamt
European Patent Office
Office européen des brevets

(11) **EP 4 035 893 A1**

(12) **EUROPEAN PATENT APPLICATION**
published in accordance with Art. 153(4) EPC

(43) Date of publication:
**03.08.2022 Bulletin 2022/31**

(21) Application number: **20869095.8**

(22) Date of filing: **18.09.2020**

(51) International Patent Classification (IPC):
**B32B 27/00** (2006.01)   **C09D 5/00** (2006.01)
**C09D 5/02** (2006.01)   **C09D 5/20** (2006.01)
**C09D 201/00** (2006.01)   **C09D 7/61** (2018.01)
**C09D 7/63** (2018.01)   **C09D 1/00** (2006.01)
**C09D 1/02** (2006.01)

(52) Cooperative Patent Classification (CPC):
**B32B 27/00; C09D 1/00; C09D 1/02; C09D 5/00;
C09D 5/02; C09D 5/20; C09D 7/61; C09D 7/63;
C09D 201/00**

(86) International application number:
**PCT/JP2020/035594**

(87) International publication number:
**WO 2021/060211 (01.04.2021 Gazette 2021/13)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **27.09.2019   JP 2019177849
19.03.2020   JP 2020049418**

(71) Applicant: **NITTO DENKO CORPORATION
Ibaraki-shi
Osaka 567-8680 (JP)**

(72) Inventors:
• **TAKENOUCHI, Yuta
Ibaraki-shi, Osaka 567-8680 (JP)**
• **IKENAGA, Akie
Ibaraki-shi, Osaka 567-8680 (JP)**
• **FUJIOKA, Kazuya
Ibaraki-shi, Osaka 567-8680 (JP)**

(74) Representative: **Hoffmann Eitle
Patent- und Rechtsanwälte PartmbB
Arabellastraße 30
81925 München (DE)**

(54) **PEELABLE COATING FILM, COATING-MATERIAL SET, AND COATING-MATERIAL FOR FORMING HYDROPHILIC COATING FILM**

(57)    The present invention relates to a peelable coating film having silica particles fixed to a surface thereof, a coating material for hydrophilic-coating-film formation which includes colloidal silica, an alkali metal silicate, and an aqueous medium, and a coating-material set including the coating material for hydrophilic-coating-film formation and a coating material for peelable-coating-film formation including an aqueous dispersion type resin composition.

FIG. 1

**Description**

TECHNICAL FIELD

The present invention relates to a peelable coating film, a coating-material set, and a coating material for hydrophilic-coating-film formation.

BACKGROUND ART

A method for preventing a structure from suffering the adhesion of soils thereto or from suffering abrasion or scratches has conventionally been used in which a surface of the structure is protected with a coating film. A technique is known in which the surface of such a coating film is hydrophilized in order to enhance the antifouling effect.

Patent Document 1 discloses a feature wherein an inorganic cured coating film which is high in hydrophilicity, hardness, strength of adhesion to organic bases, and water resistance and which has excellent antifouling/antifogging performance can be formed by applying, to a surface of an acrylic or polycarbonate base or the like, an antifogging/antifouling agent including: methanol and/or ethanol; isopropyl alcohol, n-propyl alcohol, or a glycol ether; an organosilica sol; tetrahydrofuran; and boric acid.

Patent document 2 discloses a feature wherein a hydrophilic coating film excellent in terms of antifouling property, weatherability, and warm-water resistance can be formed by using a composition containing a swelling phyllosilicate, colloidal silica, and a crosslinking agent.

CITATION LIST

PATENT LITERATURE

Patent Document 1: JP-A-2013-203774
Patent Document 2: JP-A-2014-070138

SUMMARY OF INVENTION

TECHNICAL PROBLEMS

From the standpoints of antifouling property and replaceability, such an antifouling coating film is desired to remain adherent to the structure to protect the surface thereof until a given time and to be easily peelable at an appropriate time. Examples of such a coating film that can be peeled (hereinafter referred to also as "peelable coating film") include coating films formed from aqueous dispersion type resin compositions.

The present inventors attempted to hydrophilize the surface of such a peelable coating film. However, in cases when a solvent-based coating material containing an organic solvent as the medium was used to hydrophilize the surface of a coating film as in Patent Document 1, then the peelable coating film was unable to withstand the solvent and deformed, resulting in an impaired appearance. This method hence was found to be unsuitable for hydrophilizing peelable coating films. Besides, in the first place, there is a possibility in the use of a solvent-based coating material that the volatilized organic solvent might affect the human body. It is hence desirable to hydrophilize the surface of a coating film without using a solvent-based coating material.

Meanwhile, even in the case of using a water-based coating material employing water or the like as the medium as in Patent Document 2, it has been found that in cases when the surface of a coating film is hydrophilized by crosslinking silica particles on the coating-film surface using a crosslinking agent, a crosslinked structure cannot be formed between the coating film which is a peelable coating film and the silica particles and the surface of the peelable coating film cannot be hydrophilized.

The present inventors diligently made investigations on methods for hydrophilizing the surface of a peelable coating film. As a result, the present inventors have discovered that by using a coating material including colloidal silica, a binder, and an aqueous medium, silica particles are fixed to the surface of a peelable coating film by the binder and the surface of the coating film can be hydrophilized without being deteriorated in appearance. The present invention has been thus completed.

SOLUTION TO THE PROBLEMS

The present invention is as shown under [1] to [14] below.

[1] A peelable coating film formed from an aqueous dispersion type resin composition, the peelable coating film having silica particles fixed to a surface of the coating film.

[2] The peelable coating film according to [1] wherein the silica particles have been fixed to the surface of the coating film by a binder.

[3] The peelable coating film according to [2] wherein the binder is an inorganic binder.

[4] The peelable coating film according to [3] wherein the inorganic binder includes at least one binder selected from the group consisting of alkali metal silicates, aluminosilicates, borosilicates, alkali metal salts, and boric acid.

[5] The peelable coating film according to any one of [1] to [4] which has an antibacterial fixed to the surface of the coating film.

[6] A coating-material set including

a coating material for peelable-coating-film formation which includes an aqueous dispersion type resin composition and is for forming a peelable coating film and
a coating material for hydrophilic-coating-film formation which includes colloidal silica, a binder, and an aqueous medium and is for forming a hydrophilic coating film on the peelable coating film.

[7] The coating-material set according to [6] wherein the binder is an inorganic binder.

[8] The coating-material set according to [7] wherein the inorganic binder includes at least one binder selected from the group consisting of alkali metal silicates, aluminosilicates, borosilicates, alkali metal salts, and boric acid.

[9] The coating-material set according to any one of [6] to [8] wherein the coating material for hydrophilic-coating-film formation further contains an antibacterial.

[10] The coating-material set according to any one of [6] to [9] wherein the coating material for hydrophilic-coating-film formation further contains a wetting agent.

[11] The coating-material set according to any one of [6] to [10] wherein the coating material for hydrophilic-coating-film formation contains 0.1-30 parts by weight (on solid basis) of the colloidal silica and 0.01-10 parts by weight of the binder per 100 parts by weight of the aqueous medium.

[12] A coating material for hydrophilic-coating-film formation which includes colloidal silica, an alkali metal silicate, and an aqueous medium.

[13] The coating material for hydrophilic-coating-film formation according to [12] which further contains an antibacterial.

[14] The coating material for hydrophilic-coating-film formation according to [12] or [13] which further contains a wetting agent.

ADVANTAGEOUS EFFECTS OF INVENTION

The present invention can provide a peelable coating film having a surface which has high hydrophilicity and a satisfactory appearance.
The present invention can further provide a coating-material set capable of forming a peelable coating film having a surface which has high hydrophilicity and a satisfactory appearance.

BRIEF DESCRIPTION OF DRAWINGS

[Fig. 1] Fig. 1 is a schematic view showing a state in which a hydrophilic coating film has been formed on a peelable coating film according to an embodiment.
[Fig. 2] Fig. 2 is a schematic view showing a state in which a hydrophilized peelable coating film has been formed on an adherend.

DESCRIPTION OF EMBODIMENTS

Embodiments of the present invention are explained in detail below. In this description, percent and other amounts given on a mass basis have the same meaning as percent and other amounts given on a weight basis.

<Peelable Coating Film having Silica Particles fixed thereto>

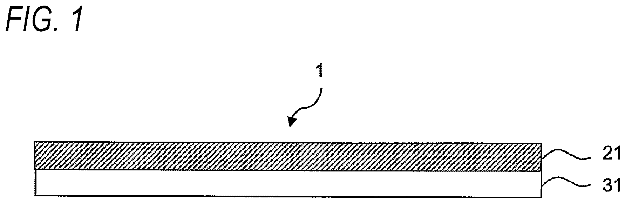

A peelable coating film according to this embodiment has silica particles fixed to a surface of the coating film. This configuration enables the surface of the peelable coating film to show excellent hydrophilicity.
In producing the peelable coating film according to this embodiment, silica particles can be fixed to a coating-film surface by applying a coating material (the coating material for hydrophilic-coating-film formation which will be described later) including colloidal silica, a binder, and an aqueous medium to a surface of a peelable coating film 31 to form a hydrophilic coating film 21 on the coating-film surface as shown in Fig. 1. Thus, silica particles are fixed to the surface of the peelable coating film by the binder.

[Peelable Coating Film]

The term "peelable coating film" in this embodiment means a coating film which can be peeled off in a sheet form without breaking. The peelable coating film can be formed by applying a coating material for peelable-coating-film formation which includes an aqueous dispersion type resin composition and drying the applied coating material. Since this peelable coating film can be easily peeled in a sheet form, a removal operation can be easily performed.
In the peelable coating film according to this embodiment, the ratio between a breaking strength (tensile breaking strength) of a film measured by a tensile test and a force of adhesion between a coating film and an SUS plate (SUS304) on which the coating film has been formed can be used as an index to the peelability of the coating film. The tensile breaking strength is a strength indicating how the coating film is unsusceptible to breakage when stretched.
In case where the tensile breaking strength is too low, the coating film, when peeled from the adherend, breaks to make the peeling difficult. Meanwhile, in case where the adhesive force is too high, higher force is necessary for peeling the coating film from the adherend, making the coating film prone to break. Consequently, for enabling the coating film to be easily peeled without breaking, the ratio of the tensile breaking strength to the adhesive force needs to be high.
The peelable coating film according to this embodiment may be one which satisfies the following index: the proportion (peelability index) of the following tensile breaking strength (N/20 mm) to the following adhesive force (N/20 mm) is 1.5 or larger. From the standpoint of ease of peeling operation, the peelability index is preferably 2.5 or larger, more preferably 3.0 or larger, still more preferably 5.0 or larger.
The term "tensile breaking strength" means a value determined by the following method. A coating material for peelable-coating-film formation including an aqueous dispersion type resin composition is applied to a surface of a PET film (trade name "Lumirror (registered trademark) S10", manufactured by Toray Industries Inc.; thickness, 75 $\mu$m) with an applicator and dried at 25°C for 12 hours to produce a sample having a thickness (tensile film thickness) of 100 $\mu$m. The obtained film is further dried at 35°C for 4 hours, subsequently cut into a size of 20 mm $\times$ 80 mm, and examined for tensile breaking strength using a tensile tester under the conditions of an initial length of 60 mm and a pulling speed of 300 mm/min. The measured strength is converted to a value corresponding to a sample width of 20 mm, and this value is taken as the tensile breaking strength (N/20 mm).
The term "adhesive force" means a value determined by the following method. A coating material for peelable-coating-film formation including an aqueous dispersion type resin composition is applied to a surface of an SUS plate (SUS304) with an applicator and dried at 25°C for 12 hours and then further dried at 35°C for 4 hours to produce a sample having a thickness (peel film thickness) of 100 $\mu$m. Next, some of the coating film is removed so as to leave a portion of the coating film which has a size of 20 mm $\times$ 100 mm. Using a tensile tester, this coating film is peeled from the SUS substrate under the conditions of a peel angle of 180° and a peeling speed of 300 mm/min, during which the required force is measured as an adhesive force. The measured force is converted to a value corresponding to a sample width of 20 mm, and this value is taken as the adhesive force (N/20 mm).

The tensile breaking strength is preferably 2.0 N/20 mm or higher, more preferably 2.5 N/20 mm or higher, still more preferably 3.0 N/20 mm or higher. In cases when the tensile breaking strength of a coating film is 2.0 N/20 mm or higher, this coating film has a sufficiently high strength and can be a peelable coating film. In addition, this coating film is prevented from being deformed by external force.

The adhesive force is preferably 0.5 N/20 mm or higher, more preferably 1.0 N/20 mm or higher, from the standpoint of adhesion. Meanwhile, from the standpoint of peeling operation efficiency, the adhesive force is preferably 15 N/20 mm or less, more preferably 10 N/20 mm or less, still more preferably 5 N/20 mm or less.

The peelable coating film according to this embodiment is formed by applying a coating material for peelable-coating-film formation which includes an aqueous dispersion type resin composition and drying the applied coating material. Aqueous dispersion type resin compositions have excellent handleability because films can be formed therefrom at ordinary temperature (25°C). Furthermore, since this coating film, which has been formed from an aqueous dispersion type resin composition, swells to a certain degree, silica particles can be fixed by a binder to the coating-film surface as will be described later. In addition, since the coating film does not swell excessively, any soils which have adhered thereto are prevented from infiltrating into inner portions of the coating film. This coating film thus exhibits an excellent antifouling effect. Moreover, the surface of the coating film can be washed with water, etc.

In this embodiment, the water content of the peelable coating film can be used as an index to swellability. There is a correlation between the swellability of a coating film and the antifouling effect.

In order for the peelable coating film to exhibit an excellent antifouling effect, the water content of the coating film is preferably 200% or less, more preferably 120% or less. In cases when an acrylic emulsion was used as the aqueous dispersion type resin composition, the water content is preferably 120% or less, more preferably 110% or less. Meanwhile, in cases when a urethane emulsion was used as the aqueous dispersion type resin composition, the water content is preferably 200% or less, more preferably 120% or less.

From the standpoint of fixing silica particles to the surface of the coating film by a binder, the water content is preferably 103% or higher, more preferably 105% or higher. Incidentally, the closer the water content to 100%, the lower the swellability. The term "water content" herein means a degree of change in mass from an initial value, which is taken as 100%.

In this embodiment, the water content of the peelable coating film can be determined by immersing the coating film in 25°C 5% aqueous ethanol solution for 2 hours, measuring the mass of the coating film before and after the immersion, and calculating the water content using the following equation (1).

$$\text{Equation (1): Water content (\%)} = 100 + \{[(\text{mass after immersion}) - (\text{mass before immersion})]/(\text{mass before immersion})\} \times 100$$

The peelability and swellability of the peelable coating film according to this embodiment can be regulated by regulating the makeup of the coating material for hydrophilic-coating-film formation including an aqueous dispersion type resin composition. For example, those properties can be regulated by selecting or regulating the kind and amount of a resin to be contained, the kind and amount of a release agent or film formation aid to be used in combination with the resin, etc.

The aqueous dispersion type resin composition is an aqueous dispersion in which at least a resin is dispersedly contained in water. Usually employed as the aqueous dispersion is one in which a resin is dispersed in the presence of a surfactant. However, use can be made of any dispersion in which a resin is dispersedly contained in water, including an aqueous dispersion formed by the self-dispersing action of a self-dispersing resin.

(Resin)

In the aqueous dispersion type resin composition, various resins can be used. Examples thereof include acrylic resins, polyurethane-based resins, polystyrene-based resins, rubbery resins, silicone-based resins, resins based on vinyl alkyl ethers, poly(vinyl alcohol)-based resins, polyvinylpyrrolidone-based resins, polyacrylamide-based resins, cellulosic resins, polyester-based resins, and fluororesins. Preferred is at least one resin selected from among acrylic resins, polyurethane-based resins, polystyrene-based resins, and rubbery resins. More preferred is at least one resin selected from among acrylic resins and polyurethane-based resins.

The acrylic resins are, for example, preferably ones obtained by emulsion-polymerizing a monomer ingredient including an alkyl (meth)acrylate.

Examples of the alkyl (meth)acrylate include methyl (meth)acrylate, ethyl (meth)acrylate, propyl (meth)acrylate, isopropyl (meth)acrylate, n-butyl (meth)acrylate, pentyl (meth)acrylate, hexyl (meth)acrylate, heptyl (meth)acrylate, 2-ethylhexyl (meth)acrylate, octyl (meth)acrylate, isooctyl (meth)acrylate, nonyl (meth)acrylate, isononyl (meth)acrylate, decyl (meth)acrylate, isodecyl (meth)acrylate, lauryl (meth)acrylate. and tetradecyl (meth)acrylate. One of such alkyl (meth)acrylates can be used alone, or two or more thereof can be used in combination. Preferred alkyl (meth)acrylates among these include n-butyl acrylate (BA) and 2-ethylhexyl acrylate (2EHA).

In this description, the term "(meth)acrylic" means acrylic and/or methacrylic. The term "acrylic resin" means a conception including both a resin obtained using acrylic acid or a derivative thereof as a constituent monomer ingredient and a resin obtained using methacrylic acid or a derivative thereof as a constituent monomer ingredient.

The proportion of an alkyl (meth)acrylate in all the monomer ingredient(s) used for synthesizing the acrylic resin is preferably 70 mass% or higher, more preferably 85 mass% or higher, still more preferably 90 mass% or higher. Although there is no particular upper limit on the proportion of the alkyl (meth)acrylate, the proportion thereof is usually preferably 99.5 mass% or less (e.g., 99 mass% or less). The acrylic resin may also be one obtained by polymerizing an alkyl (meth)acrylate substantially as the only monomer.

The polyurethane-based resins typically are products of reaction between a polyol and a polyisocyanate. Preferably used as a polyol ingredient is a high-molecular-weight polyol such as a polyacrylic polyol, a polyester polyol, or a polyether polyol.

The polyacrylic polyol is typically obtained by polymerizing a (meth)acrylic ester with a hydroxyl-group-containing monomer.

Examples of the (meth)acrylic ester include methyl (meth)acrylate, butyl (meth)acrylate, 2-ethylhexyl (meth)acrylate, and cyclohexyl (meth)acrylate.

Examples of the hydroxyl-group-containing monomer include: hydroxyalkyl esters of (meth)acrylic acid, such as 2-hydroxyethyl (meth)acrylate, 2-hydroxypropyl (meth)acrylate, 3-hydroxypropyl (meth)acrylate, 2-hydroxybutyl (meth)acrylate, 4-hydroxybutyl (meth)acrylate, and 2-hydroxypentyl (meth)acrylate; (meth)acrylic acid monoesters of polyhydric alcohols such as glycerin and trimethylolpropane; and N-methylol(meth)acrylamide.

The polyester polyol is typically obtained by reacting a polybasic acid with a polyol.

Examples of the polybasic acid include: aromatic dicarboxylic acids such as o-phthalic acid, isophthalic acid, terephthalic acid, 1,4-naphthalenedicarboxylic acid, 2,5-naphthalenedicarboxylic acid, 2,6-naphthalenedicarboxylic acid, biphenyldicarboxylic acid, and tetrahydrophthalic acid; aliphatic dicarboxylic acids such as oxalic acid, succinic acid, malonic acid, glutaric acid, adipic acid, pimelic acid, suberic acid, azelaic acid, sebacic acid, decanedicarboxylic acid, dodecanedicarboxylic acid, octadecanedicarboxylic acid, tartaric acid, alkylsuccinic acids, linoleic acid, maleic acid, fumaric acid, mesaconic acid, citraconic acid, and itaconic acid; alicyclic dicarboxylic acids such as hexahydrophthalic acid, tetrahydrophthalic acid, 1,3-cyclohexanedicarboxylic acid, and 1,4-cyclohexanedicarboxylic acid; and reactive derivatives of these, such as acid anhydrides, alkyl esters, and acid halides.

The polyether polyol is typically obtained by causing an alkylene oxide to undergo ring-opening polymerization and addition to a polyhydric alcohol. Examples of the polyhydric alcohol include ethylene glycol, diethylene glycol, propylene glycol, dipropylene glycol, glycerin, and trimethylolpropane. Examples of the alkylene oxide include ethylene oxide, propylene oxide, butylene oxide, styrene oxide, and tetrahydrofuran.

Examples of the polyisocyanate include: aliphatic diisocyanates such as tetramethylene diisocyanate, dodecamethylene diisocyanate, 1,4-butane diisocyanate, hexamethylene diisocyanate, 2,2,4-trimethylhexamethylene diisocyanate, 2,4,4-trimethylhexamethylene diisocyanate, lysine diisocyanate, 2-methylpentane 1,5-diisocyanate, and 3-methylpentane 1,5-diisocyanate; alicyclic diisocyanates such as isophorone diisocyanate, hydrogenated xylylene diisocyanate, 4,4'-cyclohexylmethane diisocyanate, 1,4-cyclohexane diisocyanate, methylcyclohexylene diisocyanate, and 1,3-bis(isocyanatomethyl)cyclohexane; aromatic diisocyanates such as tolylene diisocyanate, 2,2'-diphenylmethane diisocyanate, 2,4'-diphenylmethane diisocyanate, 4,4'-diphenylmethane diisocyanate, 4,4'-diphenyldimethylmethane diisocyanate, 4,4'-dibenzyl diisocyanate, 1,5-naphthylene diisocyanate, xylylene diisocyanate, 1,3-phenylene diisocyanate, and 1,4-phenylene diisocyanate; and araliphatic diisocyanates such as dialkyldiphenylmethane diisocyanates, tetraalkyldiphenylmethane diisocyanates, and $\alpha,\alpha,\alpha,\alpha$-tetramethylxylylene diisocyanate.

Usable as the polystyrene-based resins are, for example, SBS (styrene/butadiene block copolymers), SIS (styrene/isoprene block copolymers), SEBS (styrene/ethylene/butylene/styrene block copolymers), SEPS (styrene/ethylene/propylene/styrene block copolymers), and SEEPS (styrene/ethylene/ethylene/propylene/styrene block copolymers).

Usable as the rubbery resins are, for example, acrylic rubbers, diene-based rubbers, butyl rubbers, nitrile rubbers, hydrogenated nitrile rubbers, fluororubbers, silicone rubbers, ethylene/propylene rubbers, chloroprene rubbers, urethane rubbers, and epichlorohydrin rubbers. It is especially preferred to use any of acrylic rubbers, diene-based rubbers, and urethane rubbers. Usable as the diene-based rubbers are natural rubber, isoprene rubbers, butadiene rubbers, styrene/butadiene rubbers, chloroprene rubbers, and acrylonitrile/butadiene rubbers. It is preferred to use a styrene/butadiene rubber.

The aqueous dispersion type resin composition may contain a compound having a polar group. Examples of such compounds include the polar-group-containing resins mentioned above, silane coupling agents, crosslinking agents, and silicone oils. Examples of the resins containing polar groups include ionomers, rosin resins, and silicone resins.

In the aqueous dispersion type resin composition, the content of the compound is preferably 0.1-95 mass%, more preferably 0.5-60 mass%, based on the mass of the whole resin ingredient. The content thereof is still more preferably 0.5-40 mass%, especially preferably 0.5-20 mass%, most preferably 1-20 mass%.

The content of the resin ingredient in the aqueous dispersion type resin composition is preferably 5-95 mass%, more preferably 10-90 mass%, still more preferably 15-80 mass%, especially preferably 20-70 mass%, most preferably 25-60 mass%.

The aqueous dispersion type resin composition may be an emulsion, and is preferably an emulsion type resin composition including a polymer emulsion obtained by emulsion polymerization.

Examples of the emulsion type resin composition include emulsions containing any of the resin ingredients shown above, and preferred is an acrylic emulsion containing an acrylic resin or a urethane emulsion containing a urethane rubber.

The emulsion polymerization may be conducted by an ordinary method in which a monomer ingredient is emulsified in water and then emulsion-polymerized. Thus, an aqueous dispersion (polymer emulsion) is produced. In the emulsion polymerization, a surfactant (emulsifier), a radical polymerization initiator, a chain transfer agent as an optional ingredient, etc. are suitably incorporated. More specifically, use can be made of a known emulsion polymerization method such as, for example, an en bloc monomer introduction method (en bloc polymerization method), a monomer dropping method, or a monomer emulsion dropping method.

In the monomer dropping method and the monomer emulsion dropping method, either continuous dropping or portion-wise dropping is suitably selected. These methods can be suitably combined. Reaction conditions and the like are suitably selected, but a preferred polymerization temperature is about 40-95°C and a preferred polymerization time is about from 30 minutes to 24 hours.

The initiator to be used in the emulsion polymerization can be suitably selected from conventionally known polymerization initiators. For example, azo-compound polymerization initiators such as 2,2'-azobisisobutyronitrile can be advantageously used. Other examples of the polymerization initiator include: persulfates such as potassium persulfate; peroxide initiators such as benzoyl peroxide and hydrogen peroxide; substituted-ethane initiators such as a phenyl-substituted ethane; and aromatic carbonyl compounds.

Still other examples of the polymerization initiator include redox initiators based on a combination of a peroxide and a reducing agent. One of such polymerization initiators can be used alone, or two or more thereof can be used in combination. The amount of the polymerization initiator to be used may be an ordinary one, and can be selected from the range of about 0.005-1 part by mass (typically 0.01-1 part by mass) per 100 parts by mass of the starting-material monomer(s).

As the emulsifier, any of anionic, nonionic, and cationic emulsifiers can be used. One of these can be used alone, or two or more thereof can be used in combination. Usually, it is preferred to use an anionic or nonionic emulsifier.

Examples of the anionic emulsifiers include sodium lauryl sulfate, ammonium lauryl sulfate, sodium dodecylbenzenesulfonate, sodium polyoxyethylene alkyl ether sulfates, ammonium polyoxyethylene alkylphenyl ether sulfates, and sodium polyoxyethylene alkylphenyl ether sulfates.

Examples of the nonionic emulsifiers include polyoxyethylene alkyl ethers and polyoxyethylene alkylphenyl ethers.

Use may be made of a radical-polymerizable emulsifier (reactive emulsifier) having a structure formed by introducing a radical-polymerizable group, e.g., a propenyl group, into any of the anionic or nonionic emulsifiers mentioned above. Although the emulsifier to be used is not particularly limited, a mode in which an emulsifier having no radical-polymerizable group is used as the only emulsifier can be advantageously employed from the standpoints of polymerization stability in resin synthesis, the storage stability of the pressure-sensitive adhesive composition, etc.

Conventionally known various chain transfer agents (which can be regarded as molecular-weight regulators or polymerization-degree regulators) can be used in the polymerization according to need. Such chain transfer agents can be one or more compounds selected from among mercaptans such as n-lauryl mercaptan, tert-lauryl mercaptan, glycidyl mercaptan, and 2-mercaptoethanol. Preferred chain transfer agents among these include n-lauryl mercaptan and tert-lauryl mercaptan.

In the case of using a chain transfer agent in polymerizing the starting-material monomer(s), the amount of the chain transfer agent to be used is not particularly limited. The amount thereof can be, for example, about 0.001-0.5 parts by mass per 100 parts by mass of the starting-material monomer(s), and is usually preferably 0.01-0.1 part by mass.

The resin thus obtained has an Mw which is typically $10 \times 10^4$ or higher and is usually appropriately $20 \times 10^4$ or higher. From the standpoint of suitably attaining both adhesive force and cohesive force, the Mw thereof is preferably $30 \times 10^4$ or higher, more preferably $40 \times 10^4$ or higher, still more preferably $50 \times 10^4$ or higher.

There is no particular upper limit on the Mw of the resin to be obtained. The Mw thereof can be, for example, $500 \times 10^4$ or less, typically $200 \times 10^4$ or less, preferably $150 \times 10^4$ or less.

The Mw thereof can be regulated, for example, by selecting or regulating the kind and amount of a polymerization initiator to be used, polymerization temperature, the kind and amount of an emulsifier to be used, whether a chain transfer agent is used or not and the kind and amount thereof in the case of using it, a composition of starting-material monomer(s), the kind and degree (gel content) of crosslinks, etc.

(Release Agent and Film Formation Aid)

The aqueous dispersion type resin composition may contain a release agent or a film formation aid.

The release agent is an additive which serves to regulate the adhesive force of coating films to be formed and thereby help the coating films in being peeled from the adherends. The inclusion of a release agent in the aqueous dispersion type resin composition enables the resin composition to form coating films which have moderate adhesion to the adherends to be protected and which are apt to retain, over a long period, a function whereby the coating films, when peeled away, can be completely peeled without being damaged.

As the release agent, at least one compound selected from among surfactants, polyhydric alcohols, waxes, and the like can be advantageously used. These release agents to be used can be in the form of a solution or dispersion in water or in a powder form.

Examples of anionic surfactants include fatty acid salts such as sodium oleate, a semi-hardened beef tallow sodium salt, and potassium oleate, higher-alcohol sulfuric acid ester salts such as sodium lauryl sulfate, higher-alcohol sulfuric acid ester sodium salts, lauryl-alcohol sulfuric acid ester triethanolamine salt, and lauryl-alcohol sulfuric acid ester ammonium salt, alkylbenzenesulfonic acid salts such as sodium dodecylbenzenesulfonate, alkylnaphthalenesulfonic acid salts such as sodium alkylnaphthalenesulfonates, naphthalenesulfonic acid formalin condensates, dialkyl sulfosuccinate salts such as dioctyl sodium sulfosuccinate, alkyl phosphate salts, and ethylene oxide adducts of these anionic surfactants. One of these may be used alone, or two or more thereof may be used in combination.

Especially preferred are phosphoric acid ester type surfactants (e.g., Phosphanol RS-410 (manufactured by Toho Chemical Industry Co., Ltd.). The amount of such a surfactant to be used is 0.001-5 mass%, preferably 0.005-3 mass%, more preferably 0.005-1 mass%, based on the aqueous dispersion type resin composition of the present invention.

The anionic surfactants may be used in combination with a nonionic surfactant such as, for example, a polyoxyethylene alkyl ether, e.g., polyoxyethylene oleyl ether or polyoxyethylene lauryl ether, a polyoxyethylene alkylphenyl ether, e.g., polyoxyethylene nonylphenyl ether or polyoxyethylene octylphenyl ether, a polyoxyethylene alkyl ester, e.g., polyoxyethylene monolaurate or polyoxyethylene monostearate, a sorbitan ester, e.g., sorbitan monolaurate or sorbitan monostearate, a polyoxyethylene sorbitan alkyl ester, e.g., polyoxyethylene sorbitan monolaurate, or a polyoxyethylene/polypropylene block polymer.

Also usable in combination with these is an amphoteric surfactant such, for example, a betaine type amphoteric surfactant, e.g., a dimethylalkylbetaine, laurylbetaine, or stearylbetaine, or a small amount of a cationic surfactant, etc.

Examples of the polyhydric alcohols include ethylene glycol, propylene glycol, glycerin, catechol, butanediol, pentanediol, erythritol, glycerin monoalkyl esters, polyethylene glycol, and polypropylene glycol. Preferred examples include ethylene glycol, propylene glycol, and glycerin.

Specific examples of the waxes include: plant-derived waxes such as candelilla wax, carnauba wax, rice wax, Japan tallow, and jojoba oil; animal-derived waxes such as beeswax, lanoline, and spermaceti; mineral waxes such as montan wax, ozokerite, and ceresine; petroleum waxes such as paraffin wax, microcrystalline wax, and petrolactam; synthetic hydrocarbon waxes such as Fischer-Tropsch wax, oxidized polyethylene wax, polyethylene wax, and acrylic/ethylene copolymer waxes; modified waxes such as montan wax derivatives, paraffin wax derivatives, and microcrystalline wax derivatives; hydrogenated waxes such as hardened castor oil and derivatives of hardened castor oil; and other waxes including 12-hydroxystearic acid, stearamide, anhydrous phthalimide, bisamides, amides, glycerin esters, sorbitan esters, higher alcohols (C12 or higher, preferably C16 or higher), and higher fatty acids (C12 or higher, preferably C16 or higher).

The film formation aid is an additive which serves to help the resin composition in forming coating films. The film formation aid functions as a temporary plasticizer which, after coating-film formation, vaporizes relatively speedily to improve the strength of the coating film. Organic solvents having boiling points of 110-200°C are advantageously used.

For example, in the case where the aqueous dispersion type resin composition is an emulsion containing a resin ingredient, incorporation of a film formation aid thereinto enables the resin composition to form films in room-temperature environments even when the resin ingredient has an MFT of room temperature (15-35°C) or higher. Thus, highly even coating films are obtained.

Specific examples thereof include Texanol, propylene glycol monobutyl ether, ethylene glycol methyl ether, ethylene glycol ethyl ether, ethylene glycol monobutyl ether, diethylene glycol diethyl ether, dipropylene glycol monopropyl ether, Carbitol, butyl Carbitol, dibutyl Carbitol, and benzyl alcohol. Especially preferred of these is Texanol, because it is highly effective as a film formation aid even when used in a small amount.

These film formation aids are preferably contained in the aqueous dispersion type resin composition in an amount of 0.5-15 mass%.

In the case where the aqueous dispersion type resin composition contains, for example, an acrylic resin as the resin (resin ingredient), this resin composition preferably contains Texanol as a film formation aid or a phosphoric acid ester type surfactant as a release agent.

The aqueous dispersion type resin composition preferably contains an acrylic resin as the resin and further contains a release agent.

The aqueous dispersion type resin composition may contain any appropriate oils unless the inclusion thereof lessens the effects of the present invention. Examples of such oils include silicone oils, liquid paraffins, surfactants, liquid hydrocarbons, fluorinated oils, waxes, petrolactam, animal fats or oils, and fatty acids. Only one of these may be used, or two or more thereof may be used.

There are cases where the aqueous dispersion type resin composition containing such an oil gives coating films which can more sufficiently exhibit its antifouling effect. There are cases where the coating films can more effectively prevent the adhesion of soils thereto over a long period. There are hence cases where the coating films can more sufficiently exhibit its appearance properties and mechanical properties.

Examples of the surfactants include anionic surfactants, nonionic surfactants, amphoteric surfactants, and cationic surfactants.

Examples of the anionic surfactants include alkylbenzenesulfonates, alkyl or alkenyl ether sulfates, alkyl or alkenyl sulfates, $\alpha$-olefinsulfonates, $\alpha$-sulfofatty acids or ester salts, alkanesulfonates, saturated or unsaturated fatty acid salts, (alkyl or alkenyl ether)carboxylates, amino acid type surfactants, N-acylamino acid type surfactants, and alkyl or alkenyl phosphates or salts thereof. Only one of such anionic surfactants may be used, or two or more thereof may be used.

Examples of the nonionic surfactants include polyoxyalkylene alkyl or alkenyl ethers, polyoxyethylene alkylphenyl ethers, higher fatty acid alkanol amides or alkylene oxide adducts thereof, sucrose fatty acid esters, alkylglycosides, fatty acid glycerin monoesters, and alkylamine oxides. Only one of such nonionic surfactants may be used, or two or more thereof may be used.

Examples of the amphoteric surfactants include carboxyl type or sulfobetaine type amphoteric surfactants. Only one of such amphoteric surfactants may be used, or two or more thereof may be used.

Examples of the cationic surfactants include quaternary ammonium salts. Only one of such cationic surfactants may be used, or two or more thereof may be used.

The aqueous dispersion type resin composition may contain any other appropriate additives unless the inclusion thereof does not lessen the effects of the present invention. Examples of the other additives include thickeners (e.g., association type, synthetic polymer type, alkali-thickening type, etc.), colorants, weathering agents such as ultraviolet absorbers and light stabilizers, antibacterials, antioxidants, antifoaming agents, diatom adhesion inhibitors, agricultural chemicals, medicines (e.g., medetomidine), oxygen activation inhibitors (e.g., alkylphenols and alkylresorcinols), repellents against organisms, and fillers.

As the antibacterials, any appropriate antibacterials can be employed unless the effects of the present invention are lessened thereby. Examples of such antibacterials include the so-called antibacterials and fungicides.

Examples of the so-called antibacterials include Azoxystrobin, Benalaxyl, Benomyl, Bitertanol, Bromuconazole, Captafol, Captan, Carbendazim, Chinomethionate, Chlorothalonil, Chlozolinate, Cyprodinil, Dichlofluanid, Diclofen, Diclomezine, Dicloran, Diethofencarb, Dimethomorph, Diniconazol, Dithianon, Epoxiconazole, Famoxadone, Fenarimol, Fenbuconazole, Fenfuram, Fenpiclonil, Fentin, Fluazinam, Fludioxonil, Fluoroimide, Fluquinconazole, Flusulfamide, Flutolanil, Folpet, hexachlorobenzene, Hexaconazole, Imibenconazole, Ipconazole, Iprodione, Kresoxim-methyl, Manzeb, Maneb, Mepanipyrim, Mepronil, Metconazole, Metiram, nickel bis(dimethyl dithiocarbamate), Nuarimol, Oxine-copper, oxolinic acid, Pencycuron, Phthalide, Procymidone, Propineb, quintozene, sulfur, Tebuconazole, Tecloftalam, Tecnazene, thifluzamide, Thiophenate-methyl, Thiram, Tolclofos-methyl, Tolylfluanid, Triadimefon, Triadimenol, Triazoxide, Triforine, Triticonazole, Vinclozolin, Zineb, and Ziram.

Examples of natural antibacterials include moso bamboo extract, hinokitiol, garlic extract, and herbal-medicine ingredients such as licorice. Examples of the antibacterials further include inorganic antibacterials such as silver, copper, zinc, tin, lead, and gold. According to need, any of the following can be used as a support for these inorganic antibacterials: zeolite, hydroxyapatite, calcium carbonate, calcium aluminum silicate, polysiloxane compounds, zirconium phosphate, zirconium sulfate, ion exchangers, zinc oxide, and the like.

Examples of synthetic antibacterials include 2-pyridinethiol-1-oxide, p-chloro-m-cresol, polyhexamethylenehiguanide, hydrochloride, benzethonium chloride, alkylpolyaminoethyl glycines, benzisothiazoline, 5-chloro-2-methyl-4-isothiazolin-3-one, 1,2-benzisothiazolin-3-one, and 2,2'-dithiobis(pyridine-1-oxide).

Examples of the fungicides include sodium dehydroacetate, sodium benzoate, sodium pyridinethione 1-oxide, ethyl p-hydroxybenzoate, and 1,2-benzisothiazolin-3-one and salts thereof.

A filler or the like can be added to the aqueous dispersion type resin composition in order to improve the strength. Examples of the filler include silica particles, mica, kaolin, talc, and diatomaceous earth.

With respect to the size of such particles, the particles preferably have an average particle diameter of 5-300 nm. By regulating the size of the particles to a value within that range, not only sufficient strength can be imparted to the coating film but also the particles can be evenly dispersed in the coating film to render the coating film less apt to crack upon reception of an impact. In addition, the regulated particle size can improve the adhesion between the coating film and the adherend. The amount of the particles to be added is preferably 0.1-10 mass% based on the mass of the whole resin ingredient.

[Silica Particles]

The peelable coating film according to this embodiment has silica particles fixed to a surface of the coating film. Silica particles can be fixed to a surface of a coating film by applying a coating material (coating material for hydrophilic-coating-film formation) including colloidal silica, a binder, and an aqueous medium to the surface of a coating film and drying the applied coating material to form a hydrophilic coating film on the coating-film surface. Thus, silica particles are fixed to the surface of the peelable coating film by the binder.

The colloidal silica can impart hydrophilicity to the coating film and improve the antifouling properties. Examples of the colloidal silica include a colloid of fine particles of silicon oxide (silicic acid anhydride), as described in, for example, JP-A-Sho-53-112732, JP-B-Sho-57-9051, and JP-B-Sho-57-51653.

The colloidal silica can contain, for example, alumina, sodium aluminate, or the like according to need. The colloidal silica can further contain a stabilizer such as an inorganic base (e.g., sodium hydroxide, potassium hydroxide, lithium hydroxide, or ammonia) or an organic base (e.g., a tetramethylammonium) according to need.

Such colloidal silica is not particularly limited, and can be produced, for example, by a known sol-gel method, specifically, any of the sol-gel methods described in Werner Stober et al., J. Colloid and Interface Sci., 26, 62-69 (1968); Rickey D. Badley et al., Langmuir, 6, 792-801 (1990); and Journal of the Japan Society of Colour Material, 61 [9] 488-493 (1988).

As the colloidal silica, it is preferred, from the standpoint of antifouling property, to use colloidal silica of an aqueous dispersion type in which spherical silica particles are dispersed in water. The spherical silica particles dispersed in the colloidal silica preferably have an average particle diameter of 5-100 nm. In case where the average particle diameter thereof is less than 5 nm, the hydrophilic coating film has insufficient adhesion to the underlying peelable coating film and is prone to peel off. Meanwhile, in case where the average particle diameter thereof exceeds 100 nm, the film tends to have impaired transparency.

The colloidal silica preferably has a viscosity of 1-25 mPa·s.

The colloidal silica has a pH of preferably 7-12, more preferably 8-10.

As such colloidal silica, a commercial product can be used. Specific examples thereof include trade names "Snowtex (registered trademark)-XL", "Snowtex (registered trademark)-YL", "Snowtex (registered trademark)-ZL", "PST-2", "Snowtex (registered trademark)-20", "Snowtex (registered trademark)-30", "Snowtex (registered trademark)-30L", "Snowtex (registered trademark)-C", "Snowtex (registered trademark)-O", "Snowtex (registered trademark)-OS", "Snowtex (registered trademark)-OL", and "Snowtex (registered trademark)-50" (all manufactured by Nissan Chemical Industries, Ltd.) and trade names "Adelite (registered trademark) AT-30", "Adelite (registered trademark) AT-40", and "Adelite (registered trademark) AT-50" (all manufactured by Nippon Aerosil Co., Ltd.).

The binder is not particularly limited so long as it has the function of fixing silica particles, etc. to the surface of the peelable coating film. Preferred of such binders is an inorganic binder having a silanol group, from the standpoint of fixing silica particles to the peelable coating film.

Examples of the inorganic binder include alkali metal silicates, aluminosilicates, borosilicates, alkali metal salts, and boric acid. Of these, alkali metal silicates are preferred from the standpoint of fixing silica particles to the peelable coating film. Examples of the alkali metal silicates include sodium silicate, potassium silicate, and lithium silicate.

Cellulose nanofibers may also be used as the binder.

As the aqueous medium, a solution including water can be used. The solution including water may be pure water or may be a mixed solution or mixed medium which is a mixture of water and other substance(s). Examples of the substance(s) other than water include alcohols, e.g., ethanol.

The peelable coating film can have any desired appropriate thickness depending on intended applications, use environments, etc. The thickness of the peelable coating film is preferably 10-1,000 $\mu$m. In cases when the thickness of the peelable coating film is within that range, the antifouling effect is effectively exhibited over a sufficiently long period. In cases when the thickness of the peelable coating film is 10 $\mu$m or larger, the antifouling effect is effectively exhibited and this peelable coating film is practical. In cases when the thickness of the coating film is 1,000 $\mu$m or less, excellent operation efficiency is obtained.

The hydrophilic coating film has a thickness of preferably 0.01-1 $\mu$m, from the standpoints of durability and adhesion to the peelable coating film. In cases when the thickness thereof is 0.01 $\mu$m or larger, the surface of the coating film has sufficient durability. In cases when the thickness thereof is 1 $\mu$m or less, excellent adhesion to the peelable coating film is obtained.

The film thicknesses of the coating films can be measured, for example, with RI-205, manufactured by PEAKOCK Co., Ltd.

In the peelable coating film according to this embodiment which has silica particles fixed thereto, the surface of the coating film preferably has a contact angle, as measured at 5 minutes after dropping 2 $\mu$m of water onto the coating-film surface, by the sessile drop method according to JIS R 3257:1999, of 40° or less. The contact angle thereof is more preferably 20° or less, still more preferably 10° or less.

<Coating-Material Set>

The coating-material set according to this embodiment includes: a coating material for peelable-coating-film formation which includes an aqueous dispersion type resin composition and is for forming a peelable coating film; and a coating material for hydrophilic-coating-film formation which includes colloidal silica, a binder, and an aqueous medium and is for forming a hydrophilic coating film on the peelable coating film.

[Coating Material for Peelable-Coating-Film Formation]

The coating material for peelable-coating-film formation includes the aqueous dispersion type resin composition, and the resin composition described above can be used.

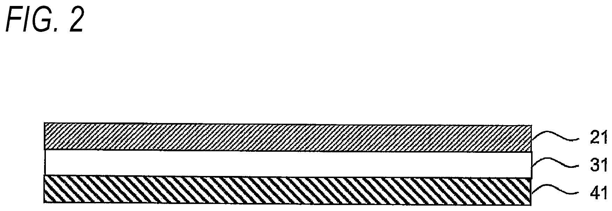

The coating material for peelable-coating-film formation is applied to an adherend 41 and dried. Thus, a peelable coating film 31 can be formed as shown in Fig. 2. Even through drying at room temperature (25°C), a highly even coating film can be obtained.

A known application method, such as spraying, application with a brush, roller coating, curtain flow coating, roll coating, dipping, or coater coating, can be used to directly apply the coating material to any adherend.

In a drying method, use is made of a drying temperature of, for example, from 0°C to 250°C, preferably from room temperature (25°C) to 180°C, more preferably from room temperature (25°C) to 160°C, and a drying time of, for example, from 2 minutes to 12 hours (first drying).

According to need, the drying temperature is regulated to a temperature of, for example, from 0°C to 250°C, preferably from room temperature (25°C) to 180°C, more preferably from room temperature (25°C) to 160°C. The drying time is, for example, from 2 minutes to 12 hours (second drying). As a result, fusion bonding at the particle boundaries proceeds and enhanced coating-film evenness is attained. Thus, a coating film which is less apt to swell and has excellent antifouling effect can be formed.

The second drying is preferably conducted at a temperature higher by 0-20°C than the temperature in the first drying for a shorter time than in the first drying.

Specific examples of the adherend include various structures including metallic products, woodwork products, plastic products, glass products, medical members (e.g., catheters, stents, gloves, pincettes, vessels, guides, and trays), buildings (internal and external wall surfaces, floor surfaces, and ceiling surfaces), electronic appliances, and transportation vehicles (e.g., vehicles such as motor vehicles, two wheelers, and railroad cars and ships).

The aqueous dispersion type resin composition has an exceedingly low organic-solvent content and is hence usable in applications such as petri dishes for cell culture, plates such as microwells, trays for conveyance, vessels, tanks, guides, food production devices, walls and tables of hospitals, old-age homes, or kindergartens, and coating performed in places where foods are handled. The aqueous dispersion type resin composition can be used for forming medical antifouling coating films for medical instruments or the like.

[Coating Material for Hydrophilic-Coating-Film Formation]

The coating material for hydrophilic-coating-film formation includes colloidal silica, a binder, and an aqueous medium, and these ingredients can be the ingredients described above.

The content of the colloidal silica (solid amount) in the coating material for hydrophilic-coating-film formation, per 100 parts by weight of the aqueous medium, is preferably 0.1 part by weight or higher, more preferably 0.5 parts by weight or higher, still more preferably 1 part by weight or higher. In cases when the content thereof is 0.1 part by weight or higher, a highly even silica-containing layer can be formed regardless of application methods.

Meanwhile, the content of the colloidal silica (solid amount) per 100 parts by weight of the aqueous medium is preferably 30 parts by weight or less, more preferably 20 parts by weight or less, still more preferably 15 parts by weight or less. In cases when the content thereof is 30 parts by weight or less, the coating film can be prevented from having an impaired appearance.

The content of the binder in the coating material for hydrophilic-coating-film formation, per 100 parts by weight of the aqueous medium, is preferably 0.01 part by weight or higher, more preferably 0.05 parts by weight or higher, still more preferably 0.1 part by weight or higher. In cases when the content thereof is 0.01 part by weight or higher, the adhesion of the silica particles is enhanced.

Meanwhile, the content of the binder per 100 parts by weight of the aqueous medium is preferably 10 parts by weight or less, more preferably 5 parts by weight or less, still more preferably 1 part by weight or less. In cases when the content thereof is 10 parts by weight or less, the coating composition can be prevented from becoming unstable to suffer, for example, gelation.

The coating material for hydrophilic-coating-film formation may contain a wetting agent. In cases when the coating material for hydrophilic-coating-film formation contains a wetting agent, this coating material, when applied to the surface of the peelable coating film, can improve the wettability of the surface and can hence be evenly applied.

The wetting agent is not particularly limited, and use can be made, for example, of various surfactants including anionic, nonionic, amphoteric, and cationic surfactants. Specific examples thereof include anionic surfactants having a carboxyl group or sulfone group as the hydrophilic group, such as fatty-acid soaps and alkylbenzenesulfonic acid salts. Examples thereof further include cationic surfactants having a quaternary ammonium group, amphoteric surfactants having both a cation and an anion in the same molecule, such as long-chain-alkylamino acids, and nonionic surfactants having a nonionic polar group, such as polyoxyethylene nonylphenyl ether.

The content of the wetting agent in the coating material for hydrophilic-coating-film formation, per 100 parts by weight of the aqueous medium, is preferably 0.01 part by weight or higher, more preferably 0.1 part by weight or higher, still more preferably 1 part by weight or higher. In cases when the content thereof is 0.01 part by weight or higher, the wettability of the surface of the peelable coating film can be sufficiently improved.

Meanwhile, the content of the wetting agent per 100 parts by weight of the aqueous medium is preferably 10 parts by weight or less, more preferably 5 parts by weight of less, still more preferably 2.5 parts by weight or less. In cases when the content thereof is 10 parts by weight or less, the stability of the colloidal silica can be maintained.

The coating material for hydrophilic-coating-film formation may contain an antibacterial. In cases when the coating material for hydrophilic-coating-film formation contains an antibacterial, the antibacterial can be fixed to the surface of the peelable coating film by the binder, etc. in forming a hydrophilic coating film on the peelable coating film. As a result, the coating-film surface can exhibit antibacterial activity. The antibacterial properties due to the antibacterial can be evaluated, for example, in accordance with JIS Z 2801:2010.

As the antibacterial, any appropriate antibacterial can be employed unless the effects of the present invention are lessened thereby. Examples of such antibacterials include the so-called antibacterials and fungicides. Specifically, use can be made of the same antibacterials as those which the aqueous dispersion type resin composition can contain.

The content of the antibacterial in the coating material for hydrophilic-coating-film formation, per 100 parts by weight of the aqueous medium, is preferably 0.001 part by weight or higher, more preferably 0.01 part by weight or higher, still more preferably 0.1 part by weight or higher. In cases when the content thereof is 0.001 part by weight or higher, a satisfactory antibacterial effect is obtained.

Meanwhile, the content of the antibacterial per 100 parts by weight of the aqueous medium is preferably 20 parts by weight or less, more preferably 10 parts by weight or less, still more preferably 5 parts by weight or less. In cases when the content thereof is 20 parts by weight or less, the coating material for hydrophilic-coating-film formation, in the liquid state, has enhanced storage stability and the antibacterial exerts a reduced influence on the appearance of the applied coating material.

The coating material for hydrophilic-coating-film formation may contain any other appropriate additives. Examples of the other additives include ultraviolet absorbers, light stabilizers, and fillers.

Methods for applying the coating material, which includes colloidal silica, a binder, and an aqueous medium, to the surface of the peelable coating film are not particularly limited. The coating material can be directly applied to the surface of the peelable coating film by a known application method such as, for example, spray coating, dip coating, spin coating, application with a brush, application with a sponge, roller coating, curtain flow coating, roll coating, or coater coating. Thus, a hydrophilic coating film 21 can be formed on the peelable coating film 31.

In a drying method, use is made of a drying temperature of, for example, from 0°C to 250°C, preferably from room temperature (25°C) to 180°C, more preferably from room temperature (25°C) to 160°C, and a drying time of, for example, from 2 minutes to 12 hours (first drying).

According to need, the drying temperature is regulated to a temperature of, for example, from 0°C to 250°C, preferably from room temperature (25°C) to 180°C, more preferably from room temperature (25°C) to 160°C. The drying time is, for example, from 2 minutes to 12 hours (second drying).

The second drying is preferably conducted at a temperature higher by 0-20°C than the temperature in the first drying for a shorter time than in the first drying.

EXAMPLES

The present invention is explained below in more detail by reference to Examples, but the present invention is not limited to the following Examples in any way.

(Example 1)

[Formation of Undercoat Layer]

A hundred parts by weight of an acrylic resin (acrylic resin; trade name "AP-609LN", manufactured by Showa Denko K.K.) was mixed with 0.01 part by weight of a release agent (phosphoric acid ester type surfactant; trade name "Phosphanol RS-410", manufactured by Toho Chemical Industry Co., Ltd.) as an additive. This mixture was stirred with Disper at a rotational speed of 3,000 rpm for 3 minutes or longer and then defoamed under vacuum with Thinky Mixer (manufactured by Thinky Corp.) at 2,200 rpm for 5 minutes to produce an aqueous dispersion type resin composition (coating material for peelable-coating-film formation) of Example 1.

The aqueous dispersion type resin composition produced above was applied to a surface of a PET film having a thickness of 75 μm (trade name "Lumirror (registered trademark) S10", manufactured by Toray Industries, Inc.) in a wet thickness of 250 μm with an applicator. The applied resin composition was dried at room temperature (25°C) for 12 hours and the formed coating film was further dried at 35°C for 4 hours, thereby forming an undercoat layer on the PET film. This coated PET film was used as a multilayer sample.

[Hydrophilization Treatment]

Three parts by weight (solid amount) of colloidal silica (trade name "Snowtex (registered trademark) 30", manufactured by Nissan Chemical Industries, Ltd.), 0.3 parts by weight of sodium silicate (manufactured by Fuji Chemical Co., Ltd.) as a binder, 0.2 parts by weight of a nonionic surfactant (trade name "SN-WET 366", manufactured by San Nopco Ltd.) as a wetting agent, and 100 parts by weight of water as an aqueous medium were mixed together to produce a coating material for hydrophilic-coating-film formation.

The multilayer sample produced above was immersed in the coating material for hydrophilic-coating-film formation for about 5 seconds and then pulled out. This sample was obliquely held at an angle of 45° to allow it to dry at 25°C for 10 minutes and was then held upward to allow it to stand still and dry at 25°C for 24 hours. Thus, the sample was hydrophilized. Thereafter, the sample was subjected three times to an operation in which water was dropped onto the surface of the peelable coating film and the surface was wiped with a paper wiper. Thus, the wetting agent present on the coating-film surface and any ingredient not adherent to the sample were removed.

(Examples 2 to 10)

Multilayer samples of Examples 2 to 10 were produced and hydrophilized in the same manner as in Example 1, except that the kinds and amounts of the ingredients were changed as shown in Table 1.

(Examples 11 to 16)

Multilayer samples of Examples 11 to 16 were produced and hydrophilized in the same manner as in Example 1, except that antibacterials were added as shown in Table 1 and that the kinds and amounts of the other ingredients were changed as shown in Table 1.

(Comparative Examples 1 to 6)

Multilayer samples of Comparative Examples 1 to 6 were produced and hydrophilized in the same manner as in Example 1, except that the kinds and amounts of the ingredients were changed as shown in Table 1.

(Comparative Examples 7 to 9)

The plates shown in Table 1 were used, in place of producing a peelable coating film, and hydrophilized in the same manner as in Example 1.

[Evaluation of Peelability]

The coating films produced in Examples 1, 3 to 9, 11, 13, and 15 and Comparative Examples 1 to 6 using "AP-609LN", the coating film produced in Example 2 using "WLS210", and the coating films produced in Examples 10, 12, 14, and 16 using "WS-6021" were examined for tensile breaking strength and adhesive force to determine the proportion (peelability index) of the tensile breaking strength (N/20 mm) to the adhesive force (N/20 mm) in order to evaluate the peelability.

(Measurement of Tensile Breaking Strength)

Each of the aqueous dispersion type resin compositions produced in Examples 1 to 16 and Comparative Examples 1 to 6 was applied to a surface of a PET film (trade name "Lumirror (registered trademark) S10", manufactured by Toray Industries Inc.; thickness, 75 $\mu$m) with an applicator and dried at 25°C for 12 hours to produce a sample having a thickness (tensile film thickness) of 100 $\mu$m. The obtained film was further dried at 35°C for 4 hours, subsequently cut into a size of 20 mm × 80 mm, and examined for tensile breaking strength using a tensile tester (device name "AUTOGRAPH AGS-X", manufactured by Shimadzu Corp.) under the conditions of an initial length of 60 mm and a pulling speed of 300 mm/min. The measured strength was converted to a value corresponding to a sample width of 20 mm, and this value was taken as the tensile breaking strength (N/20 mm).

(Method for Measuring Adhesive Force)

A coating film was formed and examined for adhesive force by the following method. Each of the aqueous dispersion type resin compositions produced in Examples 1 to 16 and Comparative Examples 1 to 6 was applied to a surface of an SUS plate (SUS304) with an applicator and dried at 25°C for 12 hours and then further dried at 35°C for 4 hours to produce a sample having a thickness (peel film thickness) of 100 $\mu$m. Next, some of the coating film was removed so as to leave a portion of the coating film which had a size of 20 mm × 100 mm. Using a tensile tester (AUTOGRAPH AGS-X, manufactured by Shimadzu Corp.), this coating film was peeled from the SUS substrate under the conditions of a peel angle of 180° and a peeling speed of 300 mm/min, during which the required force was measured as an adhesive force. The measured force was converted to a value corresponding to a sample width of 20 mm, and this value was taken as the tensile breaking strength (N/20 mm).

The results of the measurements showed that the coating films produced using "AP-609LN" in Examples 1, 3 to 9, 11, 13, and 15 and Comparative Examples 1 to 6 had a peelability index of 2.4, the coating film produced using "WLS210" in Example 2 had a peelability index of 77, and the coating films produced using "WS-6021" in Examples 10, 12, 14, and 16 had a peelability index of 11.4. That is, the coating films each had a peelability index of 1.5 or larger and had peelability.

[Determination of Water Content]

The aqueous dispersion type resin composition used in Examples 1, 3 to 9, 11, 13, and 15 and Comparative Examples 1 to 6, which included "AP-609LN", the aqueous dispersion type resin composition used in Example 2, which included resin "WLS210", and the aqueous dispersion type resin composition used in Examples 10, 12, 14, and 16, which included "WS-6021", were each applied to a surface of a PET substrate film having a thickness of 75 $\mu$m (trade name "Lumirror (registered trademark) S10", manufactured by Toray Industries, Inc.) with an applicator and dried at 25°C for 12 hours to obtain a sample having a thickness (tensile film thickness) of 100 $\mu$m. This sample was further dried at 35°C for 4 hours. Thereafter, the obtained coating film was cut into a size of 20 mm × 20 mm, and the mass of the cut sample in which the coating film was adherent to the PET substrate was measured. This sample was introduced into a glass bottle containing a solution (5% aqueous ethanol solution) and allowed to stand still (immersed) at 25°C for 2 hours. After the two hours, the sample was taken out and water drops adherent to the surfaces thereof were rapidly wiped off. The mass of the sample was then measured. Thus, the mass was measured before and after the immersion. Meanwhile, the PET substrate was separately cut into a size of 20 mm × 20 mm and the mass ($W_{PET}$) of the cut piece was measured. The water content was calculated using the following equation (1).

$$\text{Equation (1): Water content (\%)} = 100 + \{[((\text{mass after immersion}) - W_{PET}) - ((\text{mass before immersion}) - W_{PET})]/((\text{mass before immersion}) - W_{PET})\} \times 100$$

The results of the measurements showed that the coating films produced using "AP-609LN" in Examples 1, 3 to 9, 11, 13, and 15 and Comparative Examples 1 to 6 had a water content of 107%, the coating film produced using "WLS210" in Example 2 had a water content of 184%, and the coating films produced using "WS-6021" in Examples 10, 12, 14, and 16 had a water content of 103%.

[Measurement of Contact Angle]

The hydrophilized samples obtained in the Examples and Comparative Examples were each examined by dropping 2 µL of water onto the coating-film surface and measuring, after the lapse of 5 minutes, the contact angle on the coating-film surface by the sessile drop method according to JIS R 3257 using a contact angle meter (DropMaster, manufactured by Kyowa Interface Science Co., Ltd.). The results thereof are shown in Table 1.

[Evaluation of Appearance]

Each sample was evaluated for appearance change through the hydrophilization treatment. Samples which had undergone no change are indicated by ∘, and samples which had undergone a change are indicated by ✕.

[Evaluation of Antibacterial Property]

The hydrophilized samples obtained in the Examples 9 to 16 and Comparative Examples were each examined for antibacterial activity in accordance with JIS Z 2801:2010. Values of antibacterial activity of 2.0 or higher were rated as good (∘) and values of antibacterial activity less than 2.0 were rated as poor (✕). The results thereof are shown in Table 1.
With respect to each of the Examples and Comparative Examples, the makeups of the compositions and the results of the measurements/tests are summarized in Table 1.
[Table 1]

Table 1

| Section | Coating material for hydrophilic-coating-film formation | | | | | | | | | | | |
|---|---|---|---|---|---|---|---|---|---|---|---|---|
| | Colloidal silica | | Binder | | | | Antibacterial | | Wetting agent | | Medium | |
| | Name | Parts* | Name | Parts | Name | Parts | Name | Parts | Name | Parts | Water | Ethanol |
| Example 1 | Snowtex 30 | 3 | sodium silicate | 0.3 | – | – | – | – | SN-WET 366 | 0.2 | 100 | – |
| Example 2 | Snowtex 30 | 3 | sodium silicate | 0.3 | – | – | – | – | SN-WET 366 | 0.2 | 100 | – |
| Example 3 | Snowtex 30 | 3 | sodium silicate | 0.3 | cellenpia | 0.10 | – | – | SN-WET 366 | 0.2 | 100 | – |
| Example 4 | Snowtex 30L | 3 | sodium silicate | 0.3 | – | – | – | – | SN-WET 366 | 0.4 | 100 | – |
| Example 5 | Snowtex 30 | 1 | sodium silicate | 0.3 | – | – | – | – | SN-WET 366 | 0.4 | 100 | – |
| Example 6 | Snowtex 30 | 10 | sodium silicate | 0.3 | – | – | – | – | SN-WET 366 | 0.4 | 100 | – |
| Example 7 | Snowtex 30 | 3 | sodium silicate | 0.1 | – | – | – | – | SN-WET 366 | 0.2 | 100 | – |
| Example 8 | Snowtex 30 | 3 | sodium silicate | 0.5 | – | – | – | – | SN-WET 366 | 0.2 | 100 | – |
| Example 9 | Snowtex 30 | 3 | lithium silicate | 0.14 | – | – | – | – | SN-WET 366 | 0.4 | 100 | – |
| Example 10 | Snowtex 30 | 3 | lithium silicate | 0.14 | – | – | – | – | SN-WET 366 | 0.4 | 100 | – |
| Example 11 | Snowtex 30 | 3 | lithium silicate | 0.14 | – | – | silver nanoparticles | 0.1 | SN-WET 366 | 0.4 | 100 | – |
| Example 12 | Snowtex 30 | 3 | lithium silicate | 0.14 | – | – | silver nanoparticles | 0.1 | SN-WET 366 | 0.4 | 100 | – |
| Example 13 | Snowtex 30 | 3 | lithium silicate | 0.14 | – | – | IONPURE | 0.1 | SN-WET 366 | 0.4 | 100 | – |
| Example 14 | Snowtex 30 | 3 | lithium silicate | 0.14 | – | – | IONPURE | 0.1 | SN-WET 366 | 0.4 | 100 | – |
| Example 15 | Snowtex 30 | 3 | lithium silicate | 0.14 | – | – | Zeomic | 0.1 | SN-WET 366 | 0.4 | 100 | – |
| Example 16 | Snowtex 30 | 3 | lithium silicate | 0.14 | – | – | Zeomic | 0.1 | SN-WET 366 | 0.4 | 100 | – |
| Comp. Ex. 1 | Snowtex 30 | 3 | – | – | – | – | – | – | SN-WET 366 | 0.2 | 100 | – |
| Comp. Ex. 2 | – | – | sodium silicate | 0.3 | – | – | – | – | SN-WET 366 | 0.2 | 100 | – |
| Comp. Ex. 3 | Snowtex 30 | 0.03 | MS51 | 1.54 | aluminum(III) acetylacetonate | 0.04 | – | – | polyethylene glycol monolaurate | 0.03 | 41 | 57 |
| Comp. Ex. 4 | Snowtex C | 8.7 | K-2010E | 0.05 | A-21S | 1 | – | – | SN-WET 366 | 0.2 | 100 | – |
| Comp. Ex. 5 | Snowtex C | 8.7 | V-02 | 0.05 | A-21S | 1 | – | – | SN-WET 366 | 0.2 | 100 | – |
| Comp. Ex. 6 | Snowtex C | 8.7 | KBM402 | 0.05 | A-21S | 1 | – | – | SN-WET 366 | 0.2 | 100 | – |
| Comp. Ex. 7 | Snowtex 30 | 3 | sodium silicate | 0.3 | – | – | – | – | SN-WET 366 | 0.2 | 100 | – |
| Comp. Ex. 8 | Snowtex 30 | 3 | sodium silicate | 0.3 | – | – | – | – | SN-WET 366 | 0.2 | 100 | – |
| Comp. Ex. 9 | Snowtex 30 | 3 | sodium silicate | 0.3 | – | – | – | – | SN-WET 366 | 0.2 | 100 | – |

* Amount of colloidal silica being given on solid basis.

(to be continued)

Table 1 (continued)

| Section | Undercoat layer Resin Name | Contact angle (°) | Evaluation Appearance | Evaluation Antibacterial activity | Evaluation Antibacterial property |
|---|---|---|---|---|---|
| Example 1 | AP-609LN | 18.4 | ○ | — | — |
| Example 2 | WLS210 | 29.6 | ○ | — | — |
| Example 3 | AP-609LN | 22.6 | ○ | — | — |
| Example 4 | AP-609LN | 16.0 | ○ | — | — |
| Example 5 | AP-609LN | 30.4 | ○ | — | — |
| Example 6 | AP-609LN | 35.9 | ○ | — | — |
| Example 7 | AP-609LN | 25.3 | ○ | — | — |
| Example 8 | AP-609LN | 27.1 | ○ | — | — |
| Example 9 | AP-609LN | 17.8 | ○ | 1.9 | × |
| Example 10 | WS-6021 | 11.3 | ○ | 0.2 | × |
| Example 11 | AP-609LN | 20.5 | ○ | 6.2 | ○ |
| Example 12 | WS-6021 | 19.9 | ○ | 6.2 | ○ |
| Example 13 | AP-609LN | 12.8 | ○ | 6.2 | ○ |
| Example 14 | WS-6021 | 13.9 | ○ | 6.2 | ○ |
| Example 15 | AP-609LN | 11.4 | ○ | 6.2 | ○ |
| Example 16 | WS-6021 | 8.2 | ○ | 6.2 | ○ |
| Comp. Ex. 1 | AP-609LN | 76.8 | ○ | — | — |
| Comp. Ex. 2 | AP-609LN | 76.2 | ○ | — | — |
| Comp. Ex. 3 | AP-609LN | 51.1 | × | — | — |
| Comp. Ex. 4 | AP-609LN | 63.9 | × | — | — |
| Comp. Ex. 5 | AP-609LN | 67.7 | × | — | — |
| Comp. Ex. 6 | AP-609LN | 70.4 | × | — | — |
| Comp. Ex. 7 | PMMA plate | 66.4 | ○ | — | — |
| Comp. Ex. 8 | ABS plate | 72.6 | ○ | — | — |
| Comp. Ex. 9 | POM plate | 96.4 | ○ | — | — |

Details of the names given in Table 1 are as follows.

[Undercoat Layer]

(Resins)

- AP-609LN (acrylic emulsion manufactured by Showa Denko K.K.)
- WLS210 (urethane dispersion manufactured by DIC Inc.)

16

- WS-6021 (urethane dispersion manufactured by Mitsui Chemicals, Inc.)

(Plates)

- PMMA plate (manufactured by Nippon Testpanel Co., Ltd.)
- ABS plate (manufactured by Nippon Testpanel Co., Ltd.)
- POM plate (manufactured by Nippon Testpanel Co., Ltd.)

[Coating Material for Hydrophilic-Coating-Film Formation]

(Colloidal Silica)

- Snowtex (registered trademark)-30 (aqueous-dispersion colloidal silica manufactured by Nissan Chemical Industries, Ltd.; solid content ($SiO_2$), 30 mass%; particle diameter, 10-15 nm; pH, 9.5-10.5; viscosity, 1.0-6.0 mPa·s)
- Snowtex (registered trademark)-30L (aqueous-dispersion colloidal silica manufactured by Nissan Chemical Industries, Ltd.; solid content ($SiO_2$), 30 mass%; particle diameter, 40-50 nm; pH, 9.5-10.5; viscosity, 1.0-6.0 mPa·s)
- Snowtex (registered trademark)-C (aqueous-dispersion colloidal silica manufactured by Nissan Chemical Industries, Ltd.; solid content ($SiO_2$), 20 mass%; particle diameter, 10-15 nm; pH, 8.5-9.0; viscosity, 1.0-10.0 mPa·s)

(Binders)

- Sodium silicate (sodium silicate manufactured by Fuji Chemical Co., Ltd.)
- Lithium silicate (lithium silicate manufactured by Nissan Chemical Industries, Ltd.)
- MS51 (methyl silicate manufactured by Mitsubishi Chemical Corp.)
- K-2010E (oxazoline-compound crosslinking agent manufactured by Mitsubishi Chemical Corp.)
- V-02 (carbodiimide-compound crosslinking agent manufactured by Nisshinbo Chemical Inc.)
- KBM402 (epoxy-group-containing silane coupling agent manufactured by Shin-Etsu Chemical Co., Ltd.)
- cellenpia (registered trademark) (cellulose nanofibers manufactured by Nippon Pater Industries Co., Ltd.)
- Aluminum(III) acetylacetonate (crosslinking agent manufactured by TCI Co., Ltd.)
- A-21S (mica manufactured by Yamaguchi Mica Co., Ltd.)

(Antibacterials)

- Silver nanoparticles (silver-based inorganic antibacterial manufactured by Skyspring Nanomaterials Inc.)
- IONPURE (silver-based inorganic antibacterial manufactured by Ishizuka Glass Co., Ltd.)
- Zeomic (silver-based inorganic antibacterial manufactured by Sinanen Zeomic Co., Ltd.)

(Wetting Agents)

- SN-WET 366 (nonionic surfactant manufactured by San Nopco Ltd.)
- Polyethylene glycol monolaurate (wetting agent manufactured by TCI Co., Ltd.)

As can be seen from the results given in Table 1, the surfaces of the peelable coating films were able to be hydrophilized without being deteriorated in appearance, by using the water-based coating materials each including colloidal silica and a binder. In Comparative Examples 1 and 3 to 6, the fixation of silica was not ascertained.

In addition, the coating materials for hydrophilic-coating-film formation used in Examples 11 to 16 were able to impart antibacterial properties to the surfaces of peelable coating films, because these coating materials contained antibacterials.

While preferred embodiments of the present invention have been explained above, the present invention is not limited to those embodiments and various modifications and replacements can be made in the embodiments without departing from the scope of the invention.

While various embodiments have been explained above with reference to the drawings, it is a matter of course that the present invention is not limited to these embodiments. A person skilled in the art can clearly conceive of variously changed or modified modes within the scope of the claims, and these modes are, as a matter of course, deemed to be within the technical range of the present invention. Furthermore, constituent elements in the embodiments described above may be combined at will within the gist of the present invention.

The present application is based on a Japanese patent application filed on September 27, 2019 (Application No. 2019-177849) and a Japanese patent application filed on March 19, 2020 (Application No. 2020-049418), the contents thereof being incorporated herein by reference.

REFERENCE SIGNS LIST

1 Peelable coating film having hydrophilized surface
21 Hydrophilic coating film
31 Peelable coating film
41 Adherend

**Claims**

1. A peelable coating film formed from an aqueous dispersion type resin composition, the peelable coating film having silica particles fixed to a surface of the coating film.

2. The peelable coating film according to claim 1, wherein the silica particles have been fixed to the surface of the coating film by a binder.

3. The peelable coating film according to claim 2, wherein the binder is an inorganic binder.

4. The peelable coating film according to claim 3, wherein the inorganic binder comprises at least one binder selected from the group consisting of alkali metal silicates, aluminosilicates, borosilicates, alkali metal salts, and boric acid.

5. The peelable coating film according to any one of claims 1 to 4, which has an antibacterial fixed to the surface of the coating film.

6. A coating-material set comprising

   a coating material for peelable-coating-film formation which comprises an aqueous dispersion type resin composition and is for forming a peelable coating film and
   a coating material for hydrophilic-coating-film formation which comprises colloidal silica, a binder, and an aqueous medium and is for forming a hydrophilic coating film on the peelable coating film.

7. The coating-material set according to claim 6, wherein the binder is an inorganic binder.

8. The coating-material set according to claim 7, wherein the inorganic binder comprises at least one binder selected from the group consisting of alkali metal silicates, aluminosilicates, borosilicates, alkali metal salts, and boric acid.

9. The coating-material set according to any one of claims 6 to 8, wherein the coating material for hydrophilic-coating-film formation further contains an antibacterial.

10. The coating-material set according to any one of claims 6 to 9, wherein the coating material for hydrophilic-coating-film formation further contains a wetting agent.

11. The coating-material set according to any one of claims 6 to 10, wherein the coating material for hydrophilic-coating-film formation contains 0.1-30 parts by weight (on solid basis) of the colloidal silica and 0.01-10 parts by weight of the binder per 100 parts by weight of the aqueous medium.

12. A coating material for hydrophilic-coating-film formation which comprises colloidal silica, an alkali metal silicate, and an aqueous medium.

13. The coating material for hydrophilic-coating-film formation according to claim 12, which further contains an antibacterial.

14. The coating material for hydrophilic-coating-film formation according to claim 12 or 13, which further contains a wetting agent.

FIG. 1

FIG. 2

21

31

41

# EP 4 035 893 A1

## INTERNATIONAL SEARCH REPORT

International application No.

PCT/JP2020/035594

### A. CLASSIFICATION OF SUBJECT MATTER

Int.Cl. B32B27/00(2006.01)i, C09D5/00(2006.01)i, C09D5/02(2006.01)i,
C09D5/20(2006.01)i, C09D201/00(2006.01)i, C09D7/61(2018.01)i,
C09D7/63(2018.01)i, C09D1/00(2006.01)i, C09D1/02(2006.01)i
FI: C09D201/00, C09D5/20, C09D5/02, C09D7/61, C09D1/02, C09D1/00,
C09D7/63, C09D5/00D, B32B27/00L

According to International Patent Classification (IPC) or to both national classification and IPC

### B. FIELDS SEARCHED

Minimum documentation searched (classification system followed by classification symbols)
Int.Cl. C09D1/00-10/00, C09D101/00-201/10, B32B1/00-43/00, B05D1/00-7/26

Documentation searched other than minimum documentation to the extent that such documents are included in the fields searched
Published examined utility model applications of Japan     1922-1996
Published unexamined utility model applications of Japan   1971-2020
Registered utility model specifications of Japan           1996-2020
Published registered utility model applications of Japan   1994-2020

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X<br>A | WO 2003/082592 A1 (NIPPON PAPER INDUSTRIES CO., LTD.) 09 October 2003 (2003-10-09), claims 1, 3, 4, 6, page 4, line 23 to page 5, line 7, page 6, lines 16-25, example 4, table 1 | 1-6, 9-11<br>7-8, 12-14 |
| X<br>A | JP 2002-11821 A (NITTO DENKO CORPORATION) 15 January 2002 (2002-01-15), claims 1, 2, 4, paragraphs [0001], [0002], [0011], [0023], [0027], [0035], [0039], example 3, table 1, fig. 1 | 1-3, 5-7, 9<br>4, 8, 10-14 |
| X<br>A | JP 2000-109722 A (NIPPON PAINT CO., LTD.) 18 April 2000 (2000-04-18), claim 1, paragraphs [0001], [0015], [0020], examples 1-9, table 1 | 12-14<br>1-11 |

☒ Further documents are listed in the continuation of Box C.          ☒ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 12 November 2020 | 01 December 2020 |

| Name and mailing address of the ISA/<br>Japan Patent Office<br>3-4-3, Kasumigaseki, Chiyoda-ku,<br>Tokyo 100-8915, Japan | Authorized officer<br><br>Telephone No. |

Form PCT/ISA/210 (second sheet) (January 2015)

**INTERNATIONAL SEARCH REPORT**

International application No.

PCT/JP2020/035594

C (Continuation). DOCUMENTS CONSIDERED TO BE RELEVANT

| Category* | Citation of document, with indication, where appropriate, of the relevant passages | Relevant to claim No. |
|---|---|---|
| X<br>A | JP 2014-70138 A (DAINIPPON TORYO CO., LTD.) 21 April 2014 (2014-04-21), claim 1, paragraphs [0027]-[0029], [0036], [0037], [0042], examples 1-11, tables 1, 2 | 12-14<br>1-11 |
| A | JP 9-95631 A (NIPPON PARKERIZING CO., LTD.) 08 April 1997 (1997-04-08), claims 1-3, paragraphs [0001], [0004], [0008]-[0024], examples 1-16, tables 1, 2 | 1-14 |
| A | JP 2013-103719 A (SHOWA DENKO PACKAGING CO., LTD.) 30 May 2013 (2013-05-30), claim 1, paragraphs [0024], [0035]-[0039], examples, tables 1, 2 | 1-14 |
| A | JP 2003-320621 A (TEIJIN DUPONT FILMS JAPAN LTD.) 11 November 2003 (2003-11-11), claim 1, paragraphs [0001], [0010], [0024], [0025], [0036], examples 1-4 | 1-14 |
| A | JP 9-11424 A (DIAFOIL CO., LTD.) 14 January 1997 (1997-01-14), claim 1, paragraphs [0013]-[0019], examples 1-5, table 1 | 1-14 |

Form PCT/ISA/210 (second sheet) (January 2015)

| INTERNATIONAL SEARCH REPOR | | International application No. |
|---|---|---|
| Information on patent family members | | PCT/JP2020/035594 |

| | | |
|---|---|---|
| WO 2003/082592 A1 | 09 October 2003 | US 2005/0230070 A1<br>claims 1, 3, 4, 6,<br>paragraphs [0022], [0031], [0032],<br>example 3, table 1<br>EP 1498278 A1<br>CN 1642751 A |
| JP 2002-11821 A | 15 January 2002 | (Family: none) |
| JP 2000-109722 A | 18 April 2000 | (Family: none) |
| JP 2014-70138 A | 21 April 2014 | (Family: none) |
| JP 9-95631 A | 08 April 1997 | (Family: none) |
| JP 2013-103719 A | 30 May 2013 | (Family: none) |
| JP 2003-320621 A | 11 November 2003 | (Family: none) |
| JP 9-11424 A | 14 January 1997 | (Family: none) |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2013203774 A
- JP 2014070138 A
- JP SHO53112732 A
- JP SHO579051 B
- JP SHO5751653 B
- JP 2019177849 A
- JP 2020049418 A

### Non-patent literature cited in the description

- **WERNER STOBER et al.** *J. Colloid and Interface Sci.,* 1968, vol. 26, 62-69
- **RICKEY D. BADLEY et al.** *Langmuir,* 1990, vol. 6, 792-801
- *Journal of the Japan Society of Colour Material,* 1988, vol. 61 (9), 488-493